(19) Europäisches Patentamt
European Patent Office
Office européen des brevets

(11) EP 2 333 581 A1

(12) **EUROPEAN PATENT APPLICATION**

(43) Date of publication:
**15.06.2011 Bulletin 2011/24**

(51) Int Cl.:
**G01S 19/04** (2010.01)   **G01S 19/44** (2010.01)
**G01S 19/32** (2010.01)

(21) Application number: **09178573.3**

(22) Date of filing: **09.12.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Technische Universität München
80333 München (DE)**

(72) Inventor: **Henkel, Patrick
82275 Emmering (DE)**

(74) Representative: **Herrmann, Franz
Dendorfer & Herrmann
Patentanwälte Partnerschaft
Bayerstrasse 3
80335 München (DE)**

(54) **Estimation of phase and code biases on multiple frequencies with a Kalman filter**

(57)    Method for Determining Biases of Satellite Signals a new method for bias estimation on multiple frequencies with a Kalman filter is proposed. It consists of four steps: First, a least-squares estimation of ranges, ionospheric delays, ambiguities, receiver phase biases and satellite phase biases is performed. The code biases are absorbed in the ranges and ionospheric delays, and a subset of ambiguities is mapped to the phase biases to remove linear dependencies between the unknown parameters. In a second step, the accuracy of the bias estimates is efficiently improved by a Kalman filter. The real-valued a posteriori ambiguity estimates are decorrelated by an integer ambiguity transformation to reduce the time of ambiguity resolution. Once the float ambiguities have sufficiently converged, they are fixed sequentially in a third step. Finally, a second Kalman filter is used to separate the receiver and satellite code biases and the tropospheric delays from the ranges.

**FIG 3**

EP 2 333 581 A1

**Description**

**Overview**

Precise point positioning with integer ambiguity resolution requires precise estimates of satellite phase, satellite code, receiver phase and receiver code biases.

In this paper, a new method for bias estimation on multiple frequencies with a Kalman filter is proposed. It consists of four steps: First, a least-squares estimation of ranges, ionospheric delays, ambiguities, receiver phase biases and satellite phase biases is performed. The code biases are absorbed in the ranges and ionospheric delays, and a subset of ambiguities is mapped to the phase biases to remove linear dependencies between the unknown parameters. In a second step, the accuracy of the bias estimates is efficiently improved by a Kalman filter. The real-valued a posteriori ambiguity estimates are decorrelated by an integer ambiguity transformation to reduce the time of ambiguity resolution. Once the float ambiguities have sufficiently converged, they are fixed sequentially in a third step. Finally, a second Kalman filter is used to separate the receiver and satellite code biases and the tropospheric delays from the ranges. The global network of 37 Galileo Sensor Stations and two control centers is considered. The simulation results show that the receiver and satellite phase biases can be estimated with an accuracy of 5 mm within a few minutes. The use of measurements on a third frequency enables a three times earlier ambiguity fixing and, thus, a substantial improvement in the bias estimation.

**Introduction**

Integer ambiguity resolution for absolute positioning requires precise estimates of satellite phase, satellite code, receiver phase and receiver code biases. It is known that satellite biases are changing slowly over time, e.g. Ge et al. [1], Gabor and Nerem [2] and Laurichesse and Mercier [3] have observed changes in narrowlane biases of at most 5 cm within a day and of less than 1 mm within 30 seconds.

A traditional least-squares estimation of phase and code biases for each receiver and satellite is infeasible and not necessary as some biases can not be separated by a network of R reference stations which monitors $K$ satellites on $M$ frequencies. Therefore, 2R receiver code biases and $2K$ satellite code biases are mapped to the ranges and ionospheric delays, M satellite phase biases are mapped to receiver phase biases, and **MR** receiver phase biases and $M(K$-1$)$ satellite phase biases are mapped to integer ambiguities. If I denotes the number of integer ambiguities from all receivers on one frequency, then $MI$-$MR$-$M(K$-1$)$ ambiguities are kept as integers. A Kalman filter is used to estimate the ranges, range rates, ionospheric delays, the biases and the subset of integer ambiguities. Once the float ambiguities have sufficiently converged to integer numbers, an integer decorrelation transformation is applied and a sequential fixing is performed. The fixing improves the bias estimates promptly. As the receiver and satellite code biases on two frequencies are partially absorbed in the range estimates, a second Kalman filter is used to estimate the satellite positions and velocities, the tropospheric zenith delays, $R$ weighted combinations of receiver code biases and $K$-1 weighted combinations of satellite code biases. Both the bias estimates from the first and second Kalman filter could then be made available by a satellite based augmentation system.

The proposed method is verified with simulated Galileo measurements from a network of 37 Galileo Sensor Stations. The paper shows the achievable bias accuracies, the impact of the network size and the benefit of multiple frequencies. An increase in the size of the ground network especially improves the benefit of integer ambiguity resolution, i.e. the standard deviations of the receiver bias estimates of the first Kalman filter are substantially reduced by ambiguity fixing. The suggested bias estimation enables integer ambiguity resolution for precise point positioning within a few epochs and a probability of wrong fixing of less than $10^{-9}$.

**Figures**

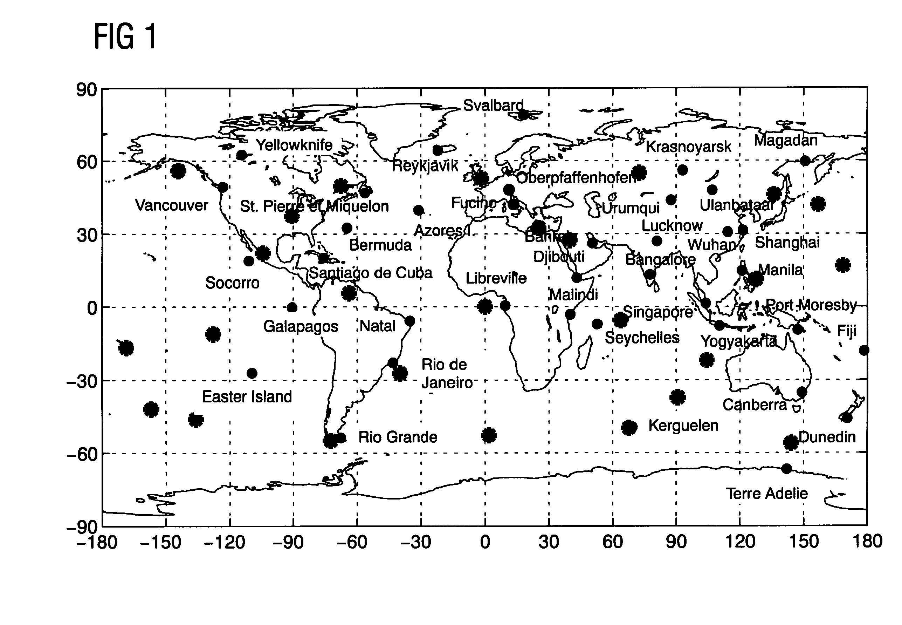

Figure 1: Global network of 37 Galileo Sensor Stations, the two Control Centers at Oberpfaffenhofen and Fucino, and the projection of 27 Galileo satellites.

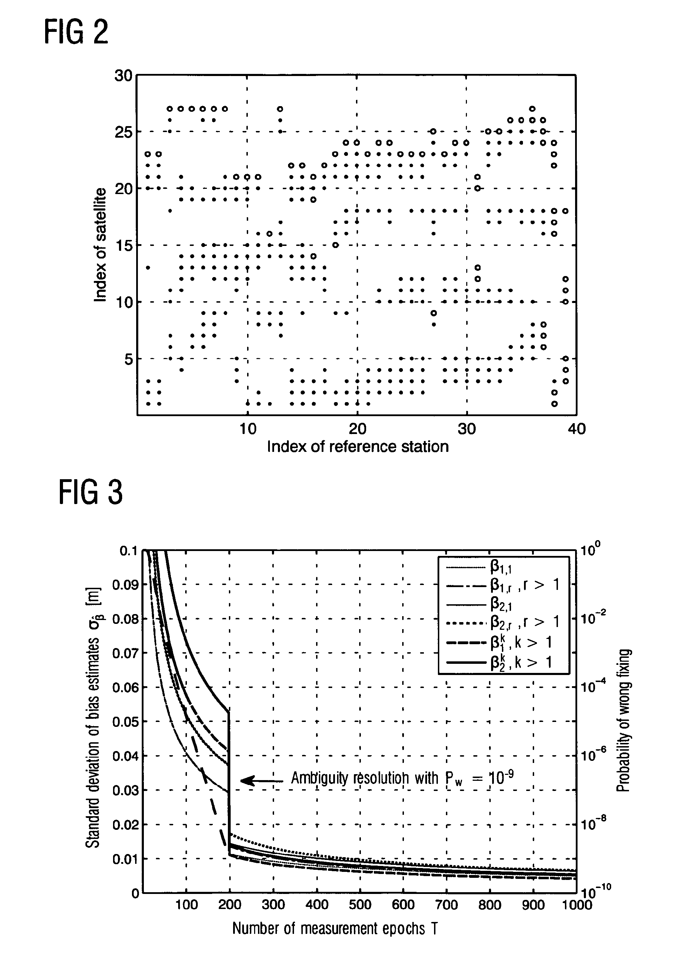

Figure 2: Integer ambiguities for the network of 37 Galileo Sensor Stations and the two control centers for a snapshot of 27 Galileo satellites: Each column shows the visible satellites for a particular reference station. The black dots refer to ambiguities that have to be estimated while the white ones are absorbed in the biases. The white dots include the ambiguities with the largest satellite index for each reference station as well as the largest reference station index for each satellite. As 5 ambiguities fulfill both criteria simultaneously, four additional ambiguities have to be removed for a full rank measurement sensitivity matrix.

Figure 3: Accuracy of receiver and satellite bias estimation for **Kr=10∀r** and R=20: The bias estimation is performed in two steps: A least-squares estimation from two epochs and a Kalman filter to improve the accuracy efficiently. After 200 epochs, the ambiguities can be fixed sequentially with an error rate of less than $10^{-9}$ after integer decorrelation. The fixing results in an immediate improvement of the bias estimates. The process noise is characterized by and $\sigma_1$=1cm, i.e. there is no process noise for biases.

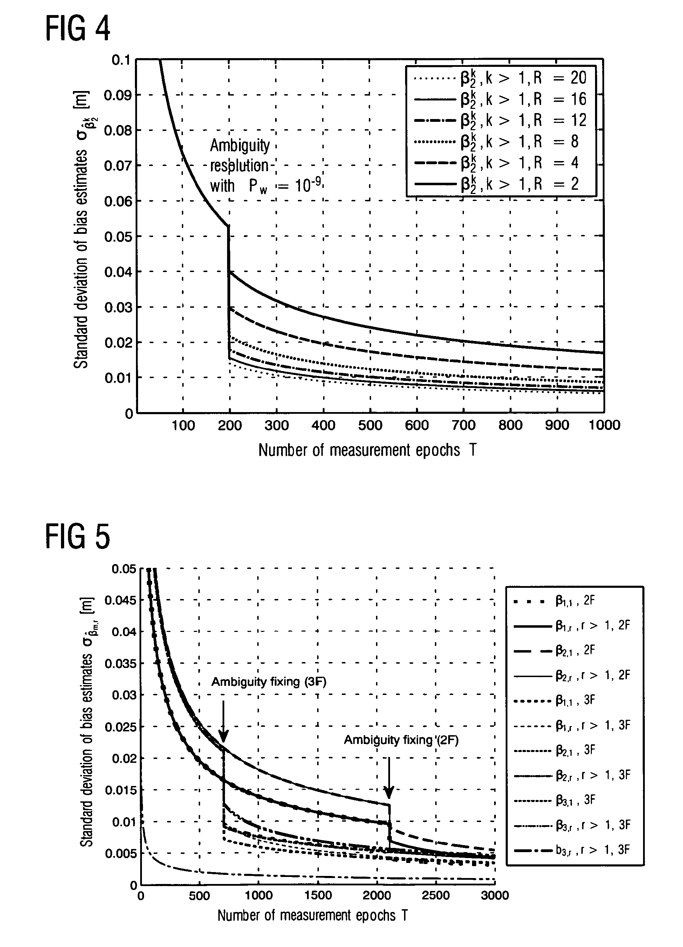

Figure 4: Benefit of large network for bias estimation: The fixing of ambiguities **(K=10)** improves the satellite bias accuracy by a factor 4 for **R=20.** The bias estimation is performed in two steps: A least-squares estimation from two epochs and a Kalman filter to improve the accuracy efficiently. The float ambiguity estimates are fixed sequentially after integer decorrelation. The process noise is characterized by **Sₚ=1m** and $\sigma_l$**=1cm**.

Figure 5: Benefit of multiple frequencies for bias estimation: A Kalman filter is used to estimate the ranges, range rates, ionospheric delays, receiver and satellites biases for a network of R=20 and K=10. The dual frequency case refers to E1-E5a measurements and the triple frequency case additionally includes E5b measurements. The larger number of frequencies enables an earlier ambiguity fixing with $P_w$=$10^{-9}$ and, thus, more accurate receiver bias estimates.

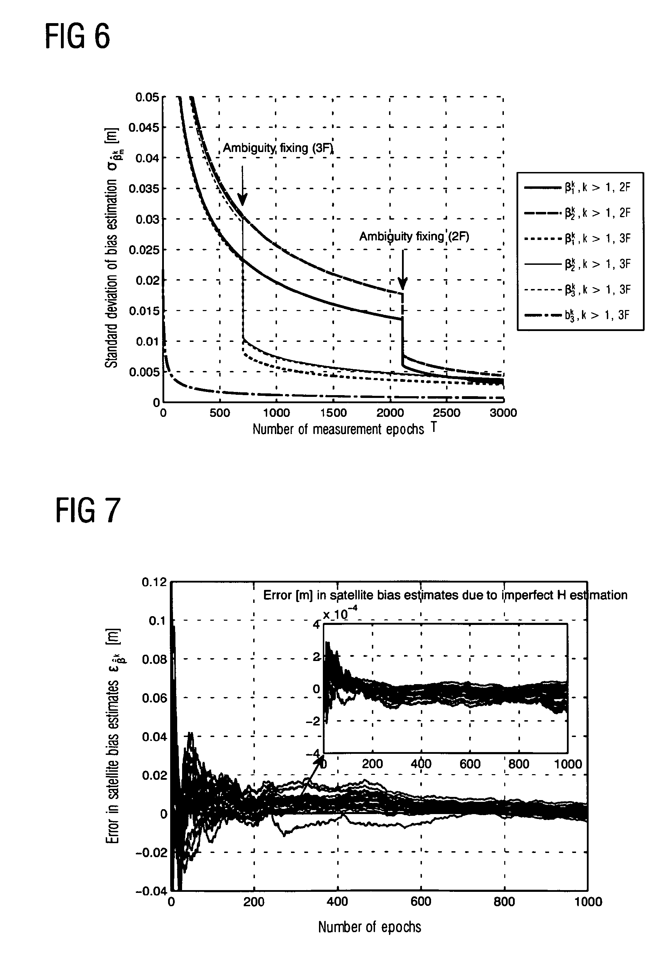

Figure 6: Benefit of multiple frequencies for bias estimation: A Kalman filter is used to estimate the ranges, range rates, ionospheric delays, receiver and satellites biases for a network of **R=20** and K=10. The dual frequency case refers to E1-E5a measurements and the triple frequency case additionally includes E5b measurements. The larger number of frequencies enables an earlier ambiguity fixing with $P_w$=$10^{-9}$ and, thus, more accurate satellite bias estimates.

Figure 7: Impact of imperfect $\mathbf{H}_n^{(2)}$ estimation on the accuracy of satellite bias estimation: The Newton method is integrated into the second Kalman filter which estimates the satellite positions and velocities, tropospheric zenith delays, receiver and satellite biases. The error in the satellite bias estimation due to an imperfect $\hat{\mathbf{H}}_n^{(2)}$ remains negligible.

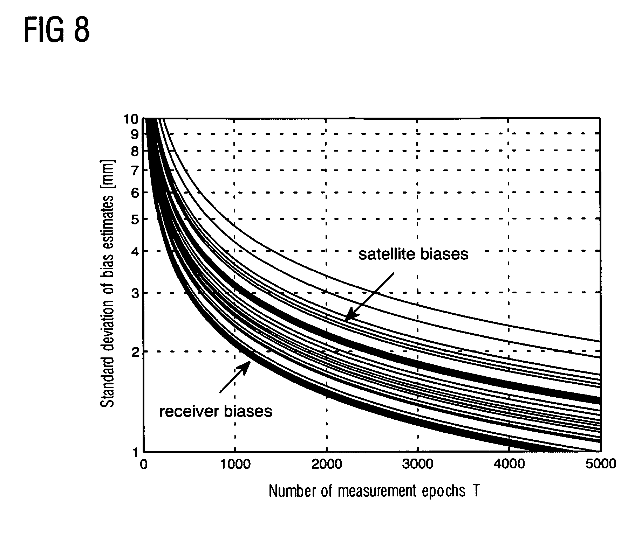

Figure 8: Standard deviations of bias estimates: The speed of convergence of the posteriori standard deviations $\sqrt{\mathbf{P}_n^+}$ depends on the geometry of the receiver-satellite network. A second Kalman filter is used to estimate the satellite positions, satellite velocities, tropospheric zenith delays, receiver and satellite biases with a network of 37 Galileo Sensor Stations.

## Measurement model and Bias estimation method

Ambiguity resolution for precise point positioning requires the estimation of phase and code biases by a network of reference stations. The following model is used for dual frequency undifferenced phase and code measurements of satellite k, receiver **r** and epoch **tₙ:**

$$\phi_{1,r}^k(t_n) = g_r^k(t_n) - I_{1,r}^k(t_n) + \lambda_1 N_{1,r}^k + \beta_{1,r} + \beta_1^k + \varepsilon_{1,r}^k(t_n)$$

$$\phi_{2,r}^k(t_n) = g_r^k(t_n) - q_{12}^2 I_{1,r}^k(t_n) + \lambda_2 N_{2,r}^k + \beta_{2,r} + \beta_2^k + \varepsilon_{2,r}^k(t_n)$$

$$\rho_{1,r}^k(t_n) = g_r^k(t_n) + I_{1,r}^k(t_n) + b_{1,r} + b_1^k + \eta_{1,r}^k(t_n)$$

$$\rho_{2,r}^k(t_n) = g_r^k(t_n) + q_{12}^2 I_{1,r}^k(t_n) + b_{2,r} + b_2^k + \eta_{2,r}^k(t_n), \tag{1}$$

where $g_r$ denotes the range including the clock offset and tropospheric delay, $I_{1,r}^k$ is the ionospheric delay, $q_{1m} = f_1/f_m$ is the ratio of frequencies, $N_{m,r}^k$ is the integer ambiguity, $\beta_{m,r}$ is the receiver phase bias, $\beta_m^k$ is the satellite phase bias, $b_{m,r}$ is the receiver code bias and $b_m^k$ is the satellite code bias on frequency **m**={1,2} .

A least-squares estimation of $g_r^k(t_n)$, $I_{1,r}^k(t_n)$, $N_{1,r}^k$, $N_{2,r}^k$, $\beta_{m,r}$, $\beta_m^k$, $b_{m,r}$ and $b_m^k$ is infeasible and not necessary even for an arbitrary large number of epochs **T,** reference stations R and satellites **K** as the extended geometry matrix becomes rank deficient. This rank deficiency can be removed from Equation (1) by a set of transformations.

First, the code biases of the first and second frequency are mapped to the ranges/ clock offsets and ionospheric delays, i.e.

$$\widetilde{g}_r^k = g_r^k + b_{g,r} + b_g^k$$
$$\widetilde{I}_r^k = I_r^k + b_{1,r} + b_1^k, \qquad\qquad (2)$$

with

$$b_{g,r} = \frac{b_{2,r} - q_{12}^2 b_{1,r}}{1 - q_{12}^2}, \qquad b_g^k = \frac{b_2^k - q_{12}^2 b_1^k}{1 - q_{12}^2}$$

$$b_{1,r} = \frac{b_{1,r} - q_{11}^2 b_{2,r}}{1 - q_{12}^2}, \qquad b_1^k = \frac{b_1^k - q_{11}^2 b_2^k}{1 - q_{12}^2}, \qquad\qquad (3)$$

which is obtained by solving the following system of equations for $\widetilde{g}_r^k$ and $\widetilde{I}_r^k$.

$$\widetilde{g}_r^k + q_{11}^2 \widetilde{I}_r^k = g_r^k + q_{11}^2 I_r^k + b_{1,r} + b_1^k$$
$$\widetilde{g}_r^k + q_{12}^2 \widetilde{I}_r^k = g_r^k + q_{12}^2 I_r^k + b_{2,r} + b_2^k, \qquad\qquad (4)$$

The phase biases of the receiver and satellite have to be corrected for the absorbed code biases, i.e.

$$\widetilde{\beta}_{1,r} = \beta_{1,r} - b_{g,r} + q_{11}^2 b_{1,r}$$
$$\widetilde{\beta}_{2,r} = \beta_{2,r} - b_{g,r} + q_{12}^2 b_{1,r}$$
$$\widetilde{\beta}_1^k = \beta_1^k - b_g^k + q_{11}^2 b_1^k$$
$$\widetilde{\beta}_2^k = \beta_2^k - b_g^k + q_{12}^2 b_1^k. \qquad\qquad (5)$$

A second transformation eliminates the satellite phase biases $\beta_1^1$ and $\beta_2^1$ by combining them with the receiver phase biases, i.e.

$$\widetilde{\widetilde{\beta}}_{1,r} = \widetilde{\beta}_{1,r} + \widetilde{\beta}_1^1$$

$$\widetilde{\widetilde{\beta}}_{2,r} = \widetilde{\beta}_{2,r} + \widetilde{\beta}_2^1$$

$$\widetilde{\widetilde{\beta}}_1^k = \widetilde{\beta}_1^k - \widetilde{\beta}_1^1$$

$$\widetilde{\widetilde{\beta}}_2^k = \widetilde{\beta}_2^k - \widetilde{\beta}_2^1. \qquad (6)$$

Thus, the phase and code measurements of Equation (1) can be rewritten as

$$\phi_{1,r}^k(t_n) = \widetilde{g}_r^k(t_n) - \widetilde{I}_{1,r}^k(t_n) + \lambda_1 N_{1,r}^k + \widetilde{\widetilde{\beta}}_{1,r} + \widetilde{\widetilde{\beta}}_1^k + \varepsilon_{1,r}^k(t_n)$$

$$\phi_{2,r}^k(t_n) = \widetilde{g}_r^k(t_n) - q_{12}^2 \widetilde{I}_{1,r}^k(t_n) + \lambda_2 N_{2,r}^k + \widetilde{\widetilde{\beta}}_{2,r} + \widetilde{\widetilde{\beta}}_2^k + \varepsilon_{2,r}^k(t_n)$$

$$\rho_{1,r}^k(t_n) = \widetilde{g}_r^k(t_n) + \widetilde{I}_{1,r}^k(t_n) + \eta_{1,r}^k(t_n)$$

$$\rho_{2,r}^k(t_n) = \widetilde{g}_r^k(t_n) + q_{12}^2 \widetilde{I}_{1,r}^k(t_n) + \eta_{2,r}^k(t_n). \qquad (7)$$

The system of Equations (7) is still rank deficient as biases and ambiguities can not be completely separated. There exist three approaches to overcome the remaining rank deficiency of degree **2R+2(K-1)** (with $K=27$ being the number of satellites): The first one is to map all biases to ambiguities which results in a poor performance as the integer property of the ambiguities is lost. The second approach is an inverse mapping, i.e. **2R+2(K-1)** ambiguities are mapped to biases and the remaining ambiguities are kept. The third approach uses a search to separate the ambiguities from the biases. In this work, the second approach is analyzed.

Clearly, the number of visible satellites and, thus, the number of unknown integer ambiguities depends on the location of the reference station and the measurement epoch. Fig. 1 shows a map of the global network of 37 Galileo Sensor Stations with the two control centers at Oberpfaffenhofen and Fucino. The positions of the 27 Galileo satellites are projected to the earth and indicated as blue stars.

Fig. 2 shows the set of $l=: \sum_{r=1}^R K_r$ integer ambiguities (with $K_r$ being the number of visible satellites from ground station $r$) for this network of 39 reference stations and 27 Galileo satellites: Each column represents the visible satellites for a particular reference station. The blue dots refer to ambiguities that have to be estimated while the red ones are absorbed in the biases. The red dots include the ambiguities with the largest satellite index for each reference station as well as the largest reference station index for each satellite, and have been determined by Gaussian elimination. As 5 ambiguities per frequency fulfill both criteria simultaneously, 4 additional ambiguities have to be removed for a full rank measurement sensitivity matrix. The remaining subset of ambiguities has to be estimated for precise bias estimation.

The proposed bias estimation consists of four steps: First, a least-squares estimation of the transformed ranges $g_r^{k,\vee}(t_n)$, ionospheric delays $I_{1,r}^{k,\vee}(t_n)$, receiver phase biases $\beta_{1,r}^\vee$ and $\beta_{2,r}^\vee$, and the subset of ambiguities is performed. As the number of unknowns $2lT+2l$ increases dramatically with $T$, the least-squares estimation is limited to a few epochs.

In the second step, a Kalman filter is used to efficiently improve the accuracy of the bias estimates. The phase and code measurements are combined in a vector $z_n$, i.e.

$$\mathbf{z}_n = \left[ \varphi_{1,1}^1(t_n), \ldots, \varphi_{1,R}^{K_R}(t_n), \varphi_{2,1}^1(t_n), \ldots, \varphi_{2,R}^{K_R}(t_n), \right.$$

$$\rho_{1,1}^1(t_n), \ldots, \rho_{1,R}^{K_R}(t_n), \rho_{2,1}^1(t_n), \ldots, \rho_{2,R}^{K_R}(t_n) \Big],$$

$$= \mathbf{H}_n^{(1)}\mathbf{x}_n + \mathbf{v}_n, \tag{8}$$

where $\mathbf{H}_n^{(1)}$ denotes the geometry-free coefficient matrix and $\mathbf{x_n}$ is the state vector that shall be defined as

$$\mathbf{x}_n = \left[ \mathbf{g}^T(t_n), \dot{\mathbf{g}}^T(t_n), \mathbf{I}^T(t_n), \boldsymbol{\beta}_R^T, \boldsymbol{\beta}_S^T, \mathbf{N}^T \right]^T, \tag{9}$$

with

$$\mathbf{g}(t_n) = \left[ g_1^1(t_n), \ldots, g_1^{K_1}(t_n), \ldots, g_R^{K_R}(t_n) \right]^T$$
$$\dot{\mathbf{g}}(t_n) = \left[ \dot{g}_1^1(t_n), \ldots, \dot{g}_1^{K_1}(t_n), \ldots, \dot{g}_R^{K_R}(t_n) \right]^T$$
$$\mathbf{I}(t_n) = \left[ I_1^1(t_n), \ldots, I_1^{K_1}(t_n), \ldots, I_R^{K_R}(t_n) \right]^T$$
$$\boldsymbol{\beta}_R = \left[ \beta_{1,1}, \ldots, \beta_{1,R}, \ldots, \beta_{2,1}, \ldots, \beta_{2,R} \right]^T$$
$$\boldsymbol{\beta}_S = \left[ \beta_1^2, \ldots, \beta_1^K, \ldots, \beta_2^2, \ldots, \beta_2^K \right]^T, \tag{10}$$

and the vector N of $2I$-$2R$-$2(K$-$1)$ integer ambiguities. In this work, the code noise $\mathbf{v_n} \sim \boldsymbol{N}(0,\Sigma_\mathbf{v})$ is assumed to be uncorrelated between satellites. The standard deviations have been set to the Cramer Rao bounds that are shown in Table 1 for the wideband Galileo signals at a carrier to noise power ratio of **45dBHz.** The phase noise standard deviations have been assumed to be **1** mm.

The state space model for $\mathbf{x}_n$ is given by

$$\mathbf{x}_n = \boldsymbol{\Phi}\mathbf{x}_{n-1} + \mathbf{w}_n, \tag{11}$$

with the state transition matrix

$$\boldsymbol{\Phi} = \begin{bmatrix} \mathbf{1}^{I \times I} & \delta t \mathbf{1}^{I \times I} & \mathbf{0} \\ \mathbf{0} & \mathbf{1}^{I \times I} & \mathbf{0} \\ \mathbf{0} & \mathbf{0} & \mathbf{1}^{3I \times 3I} \end{bmatrix}, \tag{12}$$

where $\delta t$ represents the interval between two measurements. The process noise $\mathbf{w_n} \sim \boldsymbol{N}(0,\Sigma_\mathbf{w})$ is assumed to follow a Gaussian distribution with a standard deviation of 1 m for acceleration noise and 1 cm for the ionospheric delay.

The a posteriori state $\hat{\mathbf{x}}_n^+$ estimate is given by

$$\hat{\mathbf{x}}_n^+ = \hat{\mathbf{x}}_n^- + \mathbf{K}_n^{(1)}\left(\mathbf{z}_n - \mathbf{H}_n^{(1)}\hat{\mathbf{x}}_n^-\right), \qquad (13)$$

with the Kalman gain $\mathbf{K}_n^{(1)}$, the measurement sensitivity matrix $\mathbf{H}_n^{(1)}$ which depends only on the wavelengths $\lambda_1$ and $\lambda_2$, and the a priori state estimate $\hat{\mathbf{x}}_n^-$. The latter one is obtained by the prediction

$$\hat{\mathbf{x}}_n^- = \mathbf{\Phi}\hat{\mathbf{x}}_{n-1}^+. \qquad (14)$$

The third step fixes a subset of ambiguities: The integer decorrelation transformation **Z** of Teunissen [5] is applied to the float ambiguity estimates, i.e.

$$\hat{\mathbf{N}}' = \mathbf{Z}\hat{\mathbf{N}}, \qquad (15)$$

which improves the reliability of sequential ambiguity resolution ('bootstrapping'). As there exist **364** ambiguities in Fig. 2, the computation of $\mathbf{Z} \in \mathbb{Z}^{364\times364}$ includes a large computational burden. A partial integer decorrelation as introduced in [4] enables a substantial reduction in the computational effort at the price of a slight degradation in the bias accuracy. It consists of L decorrelation steps, i.e.

$$\mathbf{Z} = \mathbf{Z}^{(1)} \cdot \mathbf{Z}^{(2)} \cdot \ldots \cdot \mathbf{Z}^{(L)}, \qquad (16)$$

where each $\mathbf{Z}^{(n)}$ includes an integer decorrelation and a permutation $\mathbf{Z}_2^{(n)}$ of two ambiguities, i.e.

$$\mathbf{Z}^{(n)} = \mathbf{Z}_1^{(n)} \cdot \mathbf{Z}_2^{(n)}. \qquad (17)$$

The partial integer decorrelation is used here to reduce the computational burden while it was originally developed in [4] to find the optimal trade-off between variance reduction and bias amplification.
The *k*-th conditional ambiguity estimate is given by

$$\hat{N}_{k|1,\ldots,k-1} = \hat{N}_k - \sum_{j=1}^{k-1} \sigma_{\hat{N}_k\hat{N}_{j|1,\ldots,j-1}} \sigma_{\hat{N}_{j|1,\ldots,j-1}}^{-2} \cdot \left(\hat{N}_{j|1,\ldots,j-1} - [\hat{N}_{j|1,\ldots,j-1}]\right), \qquad (18)$$

where $\sigma_{\hat{N}_k\hat{N}_{j|1,\ldots,j-1}}$ is the covariance between the *k*-th float and j-th conditional ambiguity estimates, $\sigma_{\hat{N}_{j|1,\ldots,j-1}}^2$ denotes the variance of the j-th conditional ambiguity estimate, and [·] is the rounding operator. The ambiguity fixing immediately improves the accuracy of the bias estimates.

In the fourth step, the estimated $\hat{I}_{1,r}^{k,\mathrm{V}}$, $\hat{\beta}_{1,r}^{\mathrm{V}}$, $\hat{\beta}_{2,r}^{\mathrm{V}}$, $\hat{\beta}_{1}^{k,\mathrm{V}}$ and $\hat{\beta}_{2}^{k,\mathrm{V}}$ are subtracted from the measurements, i.e.

$$
\begin{aligned}
\tilde{\phi}_{1,r}^{k}(t_n) &= \phi_{1,r}^{k}(t_n) + \hat{I}_{1,r}^{k,\mathrm{V}}(t_n) - \lambda_1 \check{N}_{1,r}^{k} + \hat{\beta}_{1,r}^{\mathrm{V}} + \hat{\beta}_{1}^{k,\mathrm{V}} \\
&= (\mathbf{e}_{r}^{k}(t_n))^{T}(\mathbf{r}_r - \mathbf{r}^{k}(t_n)) + \tilde{b}_r + \tilde{b}^{k} + m_{w}^{k}(t_n) T_{z,r}(t_n) + \tilde{\varepsilon}_{1,r}^{k}(t_n),
\end{aligned} \tag{19}
$$

with the unit vector $\mathbf{e}_{r}^{k}(t_n)$ pointing from the satellite to the receiver, the receiver position $\mathbf{r}_r$, the satellite position $\mathbf{r}^{k}(t_n)$, the tropospheric mapping function $m_{w}^{k}$, the tropospheric zenith delay $T_{z,r}$ and the linear combination of biases $\tilde{b}_r$ and $\tilde{b}^{k}$ which are obtained from Equation (1):

$$
\begin{aligned}
\tilde{b}_r &= b_{1,r} + \frac{1}{1 - q_{12}^2} \cdot (b_{2,r} - b_{1,r}) \\
\tilde{b}^{k} &= b_{1}^{k} + \frac{1}{1 - q_{12}^2} \cdot (b_{2}^{k} - b_{1}^{k}).
\end{aligned} \tag{20}
$$

The range corrections from the first Kalman filter can be applied also to the remaining phase and code measurements of both frequencies, i.e.

$$
\begin{aligned}
\tilde{\phi}_{2,r}^{k}(t_n) &= \phi_{2,r}^{k}(t_n) + q_{12}^2 \hat{I}_{1,r}^{k,\mathrm{V}}(t_n) - \lambda_2 \check{N}_{2,r}^{k} - \hat{\beta}_{2,r}^{\mathrm{V}} - \hat{\beta}_{2}^{k,\mathrm{V}} \\
&= (\mathbf{e}_{r}^{k}(t_n))^{T}(\mathbf{r}_r - \mathbf{r}^{k}(t_n)) + \tilde{b}_r + \tilde{b}^{k} + m_{w}^{k}(t_n) T_{z,r}(t_n) + \tilde{\varepsilon}_{2,r}^{k}(t_n), \\
\tilde{\rho}_{1,r}^{k}(t_n) &= \rho_{1,r}^{k}(t_n) - \hat{I}_{1,r}^{k,\mathrm{V}}(t_n) \\
&= (\mathbf{e}_{r}^{k}(t_n))^{T}(\mathbf{r}_r - \mathbf{r}^{k}(t_n)) + \tilde{b}_r + \tilde{b}^{k} + m_{w}^{k}(t_n) T_{z,r}(t_n) + \tilde{\eta}_{1,r}^{k}(t_n), \\
\tilde{\rho}_{2,r}^{k}(t_n) &= \rho_{2,r}^{k}(t_n) - q_{12}^2 \hat{I}_{1,r}^{k,\mathrm{V}}(t_n) \\
&= (\mathbf{e}_{r}^{k}(t_n))^{T}(\mathbf{r}_r - \mathbf{r}^{k}(t_n)) + \tilde{b}_r + \tilde{b}^{k} + m_{w}^{k}(t_n) T_{z,r}(t_n) + \tilde{\eta}_{2,r}^{k}(t_n).
\end{aligned} \tag{21}
$$

The system of transformed measurements in Equations (19) and (21) is solved by a second Kalman filter with the state vector

$$
\mathbf{x}_n = \left[ \mathbf{r}^{1,\mathrm{T}}, \ldots, \mathbf{r}^{K,\mathrm{T}}, \dot{\mathbf{r}}^{1,\mathrm{T}}, \ldots, \dot{\mathbf{r}}^{K,\mathrm{T}}, T_{z,1}, \ldots, T_{z,R}, \tilde{b}_1, \ldots, \tilde{b}_R, \tilde{b}^2, \ldots, \tilde{b}^K \right], \tag{22}
$$

where $\dot{\mathbf{r}}^{k}$ denotes the velocity of the $k$-th satellite and $T_{z,r}$ is the tropospheric zenith delay. The positions $\mathbf{r}_r$ of the 37 Galileo Sensor Stations and the two control centers can be assumed to be known. As the $\mathbf{e}_{r}^{k}$ depend on the unknown satellite positions, the iterative Newton algorithm is integrated into the Kalman filter. Its a posteriori state estimates $\hat{\mathbf{x}}_n^{+}$ are

obtained from the measurement vector $\mathbf{Z}_n = \left[ \tilde{\varphi}_{1,1}^1, \ldots, \tilde{\varphi}_{1,1}^{K_1}, \ldots, \tilde{\varphi}_{1,R}^{K_R}, \ldots, \tilde{\rho}_{2,R}^{K_R} \right]$ by the state prediction, i.e.

$$\begin{aligned}
\hat{\mathbf{x}}_n^+ &= \hat{\mathbf{x}}_n^- + \mathbf{K}_n^{(2)} \left( \mathbf{z}_n - \mathbf{H}_n^{(2)} \hat{\mathbf{x}}_n^- \right) \\
&= \left( 1 - \mathbf{K}_n^{(2)} \mathbf{H}_n^{(2)} \right) \hat{\mathbf{x}}_n^- + \mathbf{K}_n^{(2)} \mathbf{z}_n \\
&= \left( 1 - \mathbf{K}_n^{(2)} \mathbf{H}_n^{(2)} \right) \boldsymbol{\Phi} \hat{\mathbf{x}}_{n-1}^+ + \mathbf{K}_n^{(2)} \mathbf{z}_n \\
&= \left( 1 - \mathbf{K}_n^{(2)} \mathbf{H}_n^{(2)} \right) \boldsymbol{\Phi} \left( 1 - \mathbf{K}_{n-1}^{(2)} \mathbf{H}_{n-1}^{(2)} \right) \hat{\mathbf{x}}_{n-1}^- + \left( 1 - \mathbf{K}_n^{(2)} \mathbf{H}_n^{(2)} \right) \boldsymbol{\Phi} \mathbf{K}_{n-1}^{(2)} \mathbf{z}_{n-1} + \mathbf{K}_n^{(2)} \mathbf{z}_n,
\end{aligned} \qquad (23)$$

with the Kalman gain $\mathbf{K}_n^{(2)}$, the state transition matrix $\Phi$ and the extended geometry matrix $\mathbf{H}_n^{(2)}$ which includes the unit vectors from the satellites to the receivers and a mapping function for transforming the tropospheric zenith delay into slant delays. Equation (23) can also be written in non-recursive form as

$$\hat{\mathbf{x}}_n^+ = \left[ \prod_{l=1}^n (1 - \mathbf{K}_{n-l+1} \mathbf{H}_{n-l+1}) \boldsymbol{\Phi} \right] \boldsymbol{\Phi}^{-1} \hat{\mathbf{x}}_1^- + \sum_{l=1}^n \left( \prod_{m=0}^{n-l-1} (1 - \mathbf{K}_{n-m} \mathbf{H}_{n-m}) \boldsymbol{\Phi} \right) \mathbf{K}_l \mathbf{z}_l, \qquad (24)$$

where the first term represents the impact of the state initialization and the second term describes the impact of the measurements on $\hat{\mathbf{x}}_n^+$.

The obtained bias estimates from both Kalman filters could be transmitted by an augmentation system (e.g. Ground or Satellite Based Augmentation System) to enable integer ambiguity resolution for precise point positioning and to improve the positioning accuracy. Moreover, the obtained satellite position estimates could be compared to the ones from the navigation message to detect and exclude erroneous satellites.

Simulation results

Fig. 3 shows the temporal evolution of the probability of wrong fixing and the standard deviations of the receiver and satellite bias estimates for $K_r = 10, r \in \{1, \ldots, 20\}$. A 5 mm standard deviation is achieved after 1000 epochs, i.e. less than 2 minutes for a 10 Hz receiver.

The initial state vector is determined by a least-squares estimation from two epochs. The float ambiguity estimates of the Kalman filter converge within 200 epochs sufficiently to enable a probability of wrong fixing of $10^{-9}$. The fixing is performed sequentially with integer decorrelation and reduces the bias uncertainty by a factor between 2 and 4 depending on the satellite, receiver and frequency. Dual frequency code and phase measurements on E1 and E5 have been assumed.

Fig. 4 shows the impact of the network size $R$ on the achievable bias accuracies. As long as no ambiguities are fixed, the bias estimation does not benefit from a large $R$ as the number of ambiguities plus biases increases with $KR$. However, the gain in the bias estimation due to fixing depends on $R$ and increases for larger networks due to the additional redundancy. The estimation of E5 satellite biases with $\sigma_{\hat{\beta}_2^k} = 1 \ \mathrm{cm}$ cm requires 325 epochs for R=20, 750 epochs for $R = 8$ and thousands epochs for $R = 2$.

## A. Benefit of third frequency

The accuracy of bias estimation can be further improved by using measurements on a third frequency. However, there is one major difference in the bias transformations that also affects the first Kalman filter: The code biases of the third and further frequencies have to be estimated as the range and ionospheric delay have already absorbed the code biases of the first two frequencies. The extended system of equations is given by

$$\phi_{1,r}^k(t_n) = \widetilde{g}_r^k(t_n) - q_{11}^2 \widetilde{I}_{1,r}^k(t_n) + \lambda_1 N_{1,r}^k + \widetilde{\widetilde{\beta}}_{1,r} + \widetilde{\widetilde{\beta}}_1^k + \varepsilon_{1,r}^k(t_n)$$

$$\phi_{2,r}^k(t_n) = \widetilde{g}_r^k(t_n) - q_{12}^2 \widetilde{I}_{1,r}^k(t_n) + \lambda_2 N_{2,r}^k + \widetilde{\widetilde{\beta}}_{2,r} + \widetilde{\widetilde{\beta}}_2^k + \varepsilon_{2,r}^k(t_n)$$

$$\phi_{3,r}^k(t_n) = \widetilde{g}_r^k(t_n) - q_{13}^2 \widetilde{I}_{1,r}^k(t_n) + \lambda_3 N_{3,r}^k + \widetilde{\beta}_{3,r} + \widetilde{\beta}_3^k + \varepsilon_{3,r}^k(t_n)$$

$$\rho_{1,r}^k(t_n) = \widetilde{g}_r^k(t_n) + q_{11}^2 \widetilde{I}_{1,r}^k(t_n) + \eta_{1,r}^k(t_n)$$

$$\rho_{2,r}^k(t_n) = \widetilde{g}_r^k(t_n) + q_{12}^2 \widetilde{I}_{1,r}^k(t_n) + \eta_{2,r}^k(t_n)$$

$$\rho_{3,r}^k(t_n) = \widetilde{g}_r^k(t_n) + q_{13}^2 \widetilde{I}_{1,r}^k(t_n) + \widetilde{b}_{3,r} + \widetilde{b}_3^k + \eta_{3,r}^k(t_n), \tag{25}$$

where $\widetilde{g}_r^k(t_n)$, $\widetilde{I}_{1,r}^k(t_n)$, $\widetilde{\widetilde{\beta}}_{1,r}$ $\widetilde{\beta}_{1,r}$ $\widetilde{\widetilde{\beta}}_{2,r}$ $\widetilde{\beta}_{2,r}$, $\widetilde{\widetilde{\beta}}_1^k$ and $\widetilde{\widetilde{\beta}}_2^k$ are given in Equations (2) and (6). The code and phase biases on the third frequency are derived similarly as

$$\widetilde{\beta}_{3,r} = \beta_{3,r} - b_{1,r} - \frac{1+q_{13}^2}{1-q_{12}^2} \cdot (b_{2,r} - b_{1,r}) + \beta_3^1 - b_1^1 - \frac{1+q_{13}^2}{1-q_{12}^2} \cdot (b_2^1 - b_1^1) \tag{26}$$

$$\widetilde{b}_{3,r} = b_{3,r} - b_{1,r} - \frac{1-q_{13}^2}{1-q_{12}^2} \cdot \left(b_{3,r} - b_{1,r}\right)$$

$$\widetilde{\beta}_3^k = \left( \beta_3^k - b_1^k - \frac{1+q_{13}^2}{1-q_{12}^2} \cdot (b_2^k - b_1^k) \right) - \left( \beta_3^1 - b_1^1 - \frac{1+q_{13}^2}{1-q_{12}^2} \cdot (b_2^1 - b_1^1) \right)$$

$$\widetilde{b}_3^k = \left( b_3^k - b_1^k - \frac{1-q_{13}^2}{1-q_{12}^2} \cdot \left(b_2^k - b_1^k\right) \right) - \left( b_3^1 - b_1^1 - \frac{1-q_{13}^2}{1-q_{12}^2} \cdot \left(b_2^1 - b_1^1\right) \right). \tag{27}$$

For M frequencies, there exist *MR* receiver phase biases, *(M-2)R* receiver code biases, **M(K-1)** satellite phase biases, **(M-2)(K-1)** satellite code biases and **MI-MR-M(K-1)** integer ambiguities that are linear independent.

Fig. 5 and 6 show the benefit of three (E1, E5a, E5b) frequencies for the first step of bias estimation. The additional use of E5b measurements enables a three times earlier ambiguity fixing with a probability of wrong fixing of $P_w = 10^{-9}$. This earlier fixing also reduces the uncertainty of dual frequency bias estimation by a factor of 1.7 for the receiver biases and by a factor of 2.8 for the satellite biases.

Before fixing, the receiver phase biases can be estimated with a higher accuracy than the satellite phase biases as the **MR** phase measurements of the first satellite are only affected by biases of type $\beta_{m,r}$. Both the satellite phase biases and the integer ambiguities have been absorbed by $\beta_{m,r}$. On the contrary, the phase measurements of the first receiver are affected by both $\beta_{m,1}$ and $\beta_m^k$ which explains the slightly lower accuracy for the satellite phase bias estimates. Note that only the phase measurements with *r*=1 or *k*=1 are ambiguity-free in the transformed system of equations. The most accurate bias estimates are obtained for the code biases on the third frequency which converge to a standard deviation of 5 mm within less than 100 epochs. This high accuracy results from the unbiasedness of

$\rho_{1,r}^{k}(t_n)$ and $\rho_{2,r}^{k}(t_n)$ in Equation (25) which more than compensates for the increased noise level of the code measurements.

**B. Achievable accuracy after ambiguity fixing**

The second Kalman filter depends on $\mathbf{H}_{n}^{(2)}$ which has to be estimated by the Newton method at each time step. As orbit determination suffers from a significantly poorer geometry than positioning on ground, the error in the satellite bias estimation due to an imperfect estimation of $\mathbf{H}_{n}^{(2)}$ shall be analyzed. Fig. 7 shows that this contribution remains one to two orders of magnitude below the combined initialization and measurement errors, and, thus, has only a negligible impact on the convergence behaviour of satellite bias estimation. Therefore, the statistical property of $\hat{\mathbf{H}}_{n}^{(2)}$ can be ignored.

Fig. 8 shows the achievable standard deviations of the a posteriori bias estimates as a function of time for all satellites and ground stations.

**Estimation of ionospheric grid**

The combined ionospheric delays and biases can be used to compute a grid of vertical ionospheric delays. The slant ionospheric delay of Equation (2) is modeled as

$$\widetilde{I}_r^k = m_1(E_r^k)\left(\sum_{l=1}^{L}\Lambda_{r,l}^k i_l + \tau_r^k + \widetilde{\eta}_{1,r}^k\right) + b_{1,r} + b_1^k + \eta_{1,r}^k, \qquad (28)$$

where $m_1$ denotes the mapping of the vertical ionospheric delay into the slant delay, $E_r^k$ is the elevation of the **k**-th satellite seen from the **r**-th reference station, L is the number of ionospheric grid points, $\tau_r^k$ is the known background model for the vertical ionospheric delay, $\widetilde{\eta}_{1,r}^k$ is the modeling error in the vertical ionospheric delay and $\eta_{1,r}^k$ is an additional modeling error in the slant delay. $\Lambda_{r,l}^k$ represents a metric (or weight) of the *l*-th grid ionospheric vertical delay for the computation of the ionospheric vertical delay at the ionospheric pierce point for the link between the **r**-th reference station and **k**-th satellite. This metric could be defined as

$$\Lambda_{r,l}^k = \frac{\dfrac{1}{\varepsilon_{r,l}^k}}{\displaystyle\sum_{l=1}^{L}\dfrac{1}{\varepsilon_{r,l}^k}}, \qquad (29)$$

where $\varepsilon_{r,l}^k$ is a function of the distance between the ionospheric pierce point (IPP) at position $\mathbf{IPP}_r^k$ and the ionospheric grid point at position $IGP_l$, i.e.

$$\varepsilon_{r,l}^{k} = f\left(\left\|\mathrm{IPP}_{r}^{k} - \mathrm{IGP}_{l}\right\|\right). \qquad (30)$$

The grid vertical ionospheric delays $i_l$, the combined receiver biases $b_{l,r}$ and the combined satellite biases $b_1^k$ are then determined by a sequential least-squares estimation or a Kalman filter. The obtained estimates can then be transmitted by an augmentation system (e.g. Ground or Satellite Based Augmentation System).

## Conclusion

In this paper, a method for bias estimation on multiple frequencies has been proposed. It is based on a Kalman filter as the large number of unknown parameters prevents a least-squares estimation. Linear dependencies between the ranges, ionospheric delays, receiver code biases, receiver phase biases, satellite code biases, satellite phase biases and integer ambiguities have been removed by a set of transformations.

The simulation results show that the receiver and satellite phase biases can be estimated with an accuracy of 5 mm within a few minutes. The integer ambiguity fixing reduces the uncertainty immediately by a factor of 4 for 20 reference stations. The use of measurements on a third frequency results in a three times earlier ambiguity fixing and, thus, a substantial improvement in the bias estimation. The global network of 37 Galileo Sensor Stations and two control centers has been considered.

Table 1 : Cramer Rao Bounds for $C/N_0$=45dBHz

|  | Signal | BW [MHz] | $\Gamma$ [cm] |
|---|---|---|---|
| E1 | MBOC | 20 | 11.14 |
| E5 | Alt-BOC(15,10 ) | 51 | 1.95 |
| E5a | BPSK(10) | 20 | 7.83 |
| E5b | BPSK(10) | 20 | 7.83 |

References:

[1] M. Ge, G. Gendt, M. Rothacher, C. Shi and J. Liu, Resolution of GPS carrier-phase ambiguities in Precise Point Positioning (PPP) with daily observations, Journal of Geodesy, Springer, Oct. 2007.

[2] M. Gabor and S. Nerem, Satellite-satellite single difference phase calibration as applied to ambiguity resolution, Navigation Journal of the Institute of Navigation, vol. 49, no. 4, pp. 223 - 242, 2002.

[3] D. Laurichesse and F. Mercier, Integer ambiguity resolution on undifferenced GPS phase measurements and its application to PPP, Proc. of ION-GNSS, Forth Worth, USA, Sep. 2007.

[4] P. Henkel, V. Gomez and C. Günther, Modified LAMBDA for absolute carrier phase positioning in the presence of biases, Proc. of Intern. Technical Meeting (ITM), Anaheim, USA, Jan. 2009.

[5] P. Teunissen, Success Probability of Integer GPS Ambiguity Rounding and Bootstrapping, Journal of Geodesy, Vol. 72, pp. 606-612, Springer, 1998.

## Claims

1. A method for determining biases of satellite signals emitted by satellites of a satellite navigation system and received by reference stations comprising:

   - the satellite signals of the satellites are received by a plurality of reference stations,

- the biases of the satellite signals are determined by using the satellite signals received from the satellites

**characterized in that** code biases and phase biases of the satellites and reference stations are determined by using a recursive state estimator, which determines besides the biases and the positions of the satellites.

2. The method according to Claim 1,
wherein the code biases and phase biases of the satellites and reference stations are determined on at least two frequencies.

3. The method according to Claim 1 or 2,
wherein a multi-stage recursive state estimator is used, the first stage recursive state estimator estimating ranges, range rates, ionospheric delays, a number of the biases of the reference stations and satellites, as well as ambiguities, the last stage estimating the positions of the satellites, satellite velocities, tropospheric zenith delays, as well as a number of the biases of the reference stations and satellites, and a number of ambiguitues being fixed before the last stage recursive state estimator.

4. The method according to Claim 3,
wherein the recursive state estimator is a dual-stage recursive state estimator.

5. The method according to any one of Claims 1 to 4,
wherein in the first stage recursive state estimator, on two frequencies, the code biases are mapped into the ranges and into the ionospheric delays, the phase biases of one satellite are mapped to the phase biases of the reference stations and a subset of integer ambiguities are mapped to the phase biases.

6. The method according to Claim 5,
wherein, on any further frequency, the code biases are not mappable and are estimated together with the phase biases on all frequencies, on which the recursive state estimator is applied.

7. The method according to Claim 5 or 6,
wherein in the last stage recursive state estimator a combination of code biases, that have been absorbed in the ranges, are estimated.

8. The method according to any one of Claims 1 to 4,
wherein in the first stage recursive state estimator, on two frequencies, the phase biases are mapped into the ranges and into the ionospheric delays, the code biases of one satellite are mapped to code biases of the reference stations and a subset of integer ambiguities are mapped to the code biases.

9. The method according to Claim 8,
wherein, on any further frequency, the phase biases are not mappable and are estimated together with the code biases on all frequencies, on which the recursive state estimator is applied.

10. The method according to Claim 8 or 9,
wherein in the last stage recursive state estimator a combination of phase biases, that have been absorbed in the ranges, are estimated.

11. The method according to any one of Claims 5 to 10, wherein for each reference station one integer ambiguity, and additionally for each satellite one integer ambiguity is combined with phase biases of the reference stations or satellites, wherein the combination is performed for the frequencies, on which the recursive state estimator is applied.

12. The method according to any one of Claims 3 to 11, wherein the integer ambiguities are sequentially fixed by a partial integer decorrelation, wherein the degree of decorrelation is adapted to the number of ambiguities.

13. The method according to any one of Claims 3 to 12, wherein the last stage recursive state estimator includes an iterative approximation of the direction vectors from the satellites to the reference stations and a joint iterative approximation of the mapping functions of the troposheric zenith delays at the location of the reference stations.

14. The method according to any one of Claims 1 to 13, wherein a grid of ionospheric vertical delays and a combination of code biases, that have been absorbed in the ionospheric delay, are estimated by the recursive state estimator.

**15.** The method according to any one of Claims 1 to 14, wherein the recursive state estimator is a least-square recursive state estimator.

**16.** The method according to any one of Claims 1 to 15, wherein the recursive state estimator is a Kalman filter.

**17.** The method according to any one of Claims 1 to 16, wherein the positions of the satellites transmitted by the satellites are compared with the positions determined by the recursive state estimator.

**18.** A software product,
wherein the software product contains program code for implementing any one of the methods according to Claim 1 to 17.

**19.** A network of reference stations,
wherein the reference station are arranged for performing the method according to Claim 1 to 17.

FIG 1

FIG 2

FIG 3

## FIG 4

## FIG 5

FIG 6

FIG 7

# FIG 8

Europäisches
Patentamt

European
Patent Office

Office européen
des brevets

**EUROPEAN SEARCH REPORT**

Application Number

EP 09 17 8573

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | E. SARDÓN, A. RIUS, N. ZARRAOA: "Estimation of the transmitter and receiver differential biases and the ionospheric total electron content from Global Positioning System observations" RADIO SCIENCE, vol. 29, no. 3, 1994, pages 577-586, XP009135464 | 1,2, 14-19 | INV. G01S19/04 G01S19/44 G01S19/32 |
| A | * page 577 - page 581, column 1, line 3 * & GEOFFREY BLEWITT: "An Automatic Editing Algorithm For GPS Data" GEOPHYSICAL RESEARCH LETTERS, vol. 17, no. 3, March 1990 (1990-03), pages 199-202, XP007913658 * page 199, column 2 - page 200, column 2 * | 3-13 | |
| | ----- | | |
| X | FR 2 914 430 A1 (CT NAT D ETUDES SPATIALES ETAB [FR]) 3 October 2008 (2008-10-03) | 1,2, 14-19 | |
| A | * paragraph [0006] - paragraph [0017] * * paragraph [0020] - paragraph [0042] * | 3-13 | |
| | ----- | | TECHNICAL FIELDS SEARCHED (IPC) |
| X | US 2009/184869 A1 (TALBOT NICHOLAS [AU] ET AL) 23 July 2009 (2009-07-23) | 1,2, 14-19 | G01S |
| A | * paragraph [0008] - paragraph [0009] * * paragraph [0037] - paragraph [0064] * * paragraph [0073] - paragraph [0100] * * paragraph [0112] * * paragraph [0136] * | 3-13 | |
| | ----- | | |
| A | BANVILLE S ET AL: "Satellite and Receiver Phase Bias Calibration for Undifferenced Ambiguity Resolution" PROC. OF THE 2008 NATIONAL TECHNICAL MEETING OF THE ION, SAN DIEGO, CA, USA, 28 January 2008 (2008-01-28), pages 711-719, XP002532443 * page 711, column 2 - page 716, column 2 * | 1-19 | |
| | ----- | | |

The present search report has been drawn up for all claims

| Place of search | Date of completion of the search | Examiner |
|---|---|---|
| Munich | 1 July 2010 | Haugg, Sabine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 09 17 8573

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2010

| Patent document cited in search report | | Publication date | Patent family member(s) | | Publication date |
|---|---|---|---|---|---|
| FR 2914430 | A1 | 03-10-2008 | AU 2008238113 | A1 | 23-10-2008 |
| | | | CA 2682278 | A1 | 23-10-2008 |
| | | | CN 101657735 | A | 24-02-2010 |
| | | | EP 2140285 | A1 | 06-01-2010 |
| | | | WO 2008125458 | A1 | 23-10-2008 |
| | | | KR 20090127425 | A | 11-12-2009 |
| | | | US 2010085252 | A1 | 08-04-2010 |
| US 2009184869 | A1 | 23-07-2009 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Resolution of GPS carrier-phase ambiguities in Precise Point Positioning (PPP) with daily observations. **M. GE ; G. GENDT ; M. ROTHACHER ; C. SHI ; J. LIU.** Journal of Geodesy. Springer, October 2007
- **M. GABOR ; S. NEREM.** Satellite-satellite single difference phase calibration as applied to ambiguity resolution. *Navigation Journal of the Institute of Navigation,* 2002, vol. 49 (4), 223-242
- **D. LAURICHESSE ; F. MERCIER.** Integer ambiguity resolution on undifferenced GPS phase measurements and its application to PPP. *Proc. of ION-GNSS, Forth Worth, USA,* September 2007
- **P. HENKEL ; V. GOMEZ ; C. GÜNTHER.** Modified LAMBDA for absolute carrier phase positioning in the presence of biases. *Proc. of Intern. Technical Meeting (ITM), Anaheim, USA,* January 2009
- Success Probability of Integer GPS Ambiguity Rounding and Bootstrapping. **P. TEUNISSEN.** Journal of Geodesy. Springer, 1998, vol. 72, 606-612